# EUROPÄISCHE PATENTSCHRIFT

(11) **EP 1 497 546 B1**
(45) Veröffentlichungstag und Bekanntmachung des Hinweises auf die Patenterteilung: **26.03.2008**
(21) Anmeldenummer: 03717118.8
(22) Anmeldetag: 27.02.2003
(51) Int. Cl.: F02F 7/00, F16J 15/12, B29C 39/10, B29C 70/76, F02F 11/00

(54) **VERFAHREN ZUR HERSTELLUNG GEHÄUSEDECKELS**
METHOD FOR PRODUCING A HOUSING COVER
PROCEDE DE FABRICATION D'UN COUVERCLE DE CARTER

(30) Priorität: 19.04.2002 DE 10217522
(43) Veröffentlichungstag der Anmeldung: 19.01.2005
(73) Patentinhaber: Federal-Mogul Sealing Systems Bretten GmbH, 75015 Bretten (DE)
(72) Erfinder: STÖCKLE, Thomas, 76133 Karlsruhe (DE); FERBER, Markus, 76646 Bruchsal (DE); BENDL, Klaus, 75038 Oberdingen (DE); SCHWARZER, Norbert, 53884 Much (DE)
(86) Internationale Anmeldenummer: PCT/DE2003/000633
(87) Internationale Veröffentlichungsnummer: WO 2003/089772

(56) Entgegenhaltungen:
- EP-A- 0 860 602
- DE-A- 4 125 344
- DE-C- 3 927 340
- DE-C- 4 235 437
- US-A- 4 514 529

## Beschreibung

Die Erfindung beschreibt ein Verfahren zur Herstellung eines Gehäusedeckels für eine Verbrennungskraftmaschine, insbesondere Zylinderkopfhauben oder Ölwannen, zum lösbaren Befestigen am Motorblock, insbesondere mittels Schrauben, mit einer elastomeren Dichtung, die einen Trägerrahmen enthält und die zum flüssigkeitsdichten Verschließen gegenüber einer Zylinderkopfoberfläche dient, wobei die Dichtung mit dem Gehäusedeckel unlösbar verbunden ist.

In der Automobilindustrie werden Anbauteile an Motoren modularisiert, um die Montage zu beschleunigen und zu vereinfachen. Neben der leichteren Montage spielt die Geräuschentwicklung der Motoren eine immer bedeutendere Rolle. Es ist heute allgemein üblich, dass Anbauteile über Kunststoffelemente entkoppelt befestigt werden.

In der DE 36 39 218 A1 wird ein Ventildeckel für den Zylinderkopf eines Verbrennungsmotors offenbart, der an der dem Zylinderkopf zugekehrten Randfläche eine Dichtung aus Gummi aufweist. Diese Dichtung wird unter Zwischenschaltung eines Haftvermittlers in thermisch erweichtem Zustand angespritzt, so dass die Dichtung nach dem Abkühlen an der Randfläche befestigt ist.

Nachteilig bei dieser Art der Befestigung einer Dichtung an einem Ventildeckel ist, dass das Gummi an der Dichtung im eingebauten Zustand relaxieren kann. Die Gefahr des Relaxierens besteht insbesondere deshalb, weil das Gummi einer ständig wechselnden thermischen Belastung unterworfen ist und weil die Belastung auf die Dichtung zwischen den Befestigungsschrauben stark variiert.

Um der Relaxation entgegenzutreten und die Belastung auf die Dichtung möglichst gleichmäßig zu verteilen, ist aus der DE 41 25 344 C2 eine Gummiformdichtung mit einer Blecheinlage bzw. einem Trägerrahmen bekannt, die von einem gummielastischen Material umformt ist und Löcher zur Aufnahme von Schrauben aufweist. Es ist heute allgemein üblich solche metallverstärkten Gummiformdichtungen einzusetzen.

Diese Art von Dichtungen haben aber den Nachteil, dass sie von Hand montiert werden und dabei verbogen werden können. Das Verbiegen der Dichtung, insbesondere der Trägerrahmen, kann zu Undichtigkeiten führen oder dazu, dass die Dichtung unbrauchbar wird.

Eine weitere mit einem Träger verstärkte Dichtung wird in der EP 0 632 195 B1 offenbart. Dieser Druckschrift liegt die Aufgabe zugrunde, eine gattungsgemäße Dichtung zu entwickeln, die eine leichtere Montage ermöglicht. Dabei erstrecken sich elastische Elemente am Außenumfang der Elastomerdichtung, die durch Umklappen in die Durchgangsbohrungen des Gehäusedeckels gesteckt werden. Auf diese Weise wird eine Abdichtung geschaffen, die sämtliche Elemente zur Körperschallisolierung aufweist.

Zur Montage des Gehäusedeckels muß zuerst die Dichtung auf den Motorblock aufgelegt und anschließend der Gehäusedeckel auf der Dichtung positioniert werden. Danach werden die elastischen Elemente der Dichtung umgeklappt und die Befestigungsschrauben eingeführt. Nachteilig hierbei ist, dass zum Umklappen und Einführen mehrere Arbeitsschritte notwendig sind. Mehrere Arbeitsschritte benötigen aber auch mehr Zeit, was sich wiederum auf die Herstellungskosten niederschlägt. Weiterhin nachteilig wirkt sich das Umklappen der elastischen Elemente auf die Automatisierung aus.

Um die Herstellungskosten zu minimieren wird in der EP 0 860 602 A1 ein Verfahren vorgeschlagen, bei dem eine Dichtung, die einen Trägerrahmen aufweist, an eine Zylinderkopfhaube angeklebt wird. Das Verfahren beinhaltet die Schritte: Formen des Haubenteils aus Kunststoff, Aktivieren einer dem Haubenteil gegenüberstehenden Fläche der Dichtung durch Hochfrequenzbehandlung, Aufbringen von Klebstoff auf die aktivierte Fläche der Dichtung, Einbringen von Haubenteil und Dichtung in eine heizbare, vorgewärmte Klebevorrichtung, Halten der Klebevorrichtung in geschlossenem Zustand für eine vorgegebene Zeit auf einer vorgegebenen Temperatur und Entnehmen der fertigen Zylinderkopfhaube aus der Klebevorrichtung.

Bei einer Zylinderkopfhaube nach der EP 0 860 602 A1 greifen die Befestigungsschrauben bevorzugt direkt an dem metallischen Trägerrahmen an. Dadurch ist es nun zwar möglich die Zylinderkopfhaube mit der Dichtung in einem Arbeitsgang zu montieren, das Fügen mittels Kleben birgt aber Gefahren. Das Verkleben der Dichtung mit dem Haubenteil gilt zwar als unlösbare Verbindung, Klebemittel unterliegen aber einer Alterung. Diese Alterung kann zu einem vorzeitigen Ablösen der Dichtung vom Haubenteil führen. Neben diesem Nachteil ist zum Kleben ein weiterer Fertigungsschritt notwendig, was wiederum die Herstellungskosten negativ beeinflusst. Auch kann es bei unzureichend gereinigten Fügeteilen und Feuchtigkeit in der Luft zu einem unvollkommenen Klebevorgang kommen, so dass sich die Dichtung von der Zylinderkopfhaube löst.

Aus der DE 42 35 437 C1 ist eine Ölabschirmhaube offenbart an die eine Haubendichtung mittels Schnappverbindungen befestigt ist. Die Dichtung kann auch an die Ölabschirmhaube anvulkanisiert oder angeklebt sein. Wie und mit welchen Mitteln das Anvulkansieren erfolgt wird nicht offenbart.

Der Erfindung liegt die Aufgabe zugrunde, ein Verfahren zur Herstellung eines gattungsgemäßen Gehäusedeckels für eine Verbrennungskraftmaschine zu entwickeln, der mit minimalem Fertigungsaufwand und reduzierten Herstellungskosten gefertigt werden kann und der einen optimalen Verbund zwischen Dichtung und Gehäusedeckel gewährleistet.

Diese Aufgabe wird erfindungsgemäß durch den kennzeichnenden Teil des Patentanspruchs 1 gelöst, vorteilhafte Ausgestaltungsbeispiele der Erfindung sind in den Unteransprüchen dokumentiert.

Der erfindungsgemäße Gedanke überwindet die vorgenannten technischen Nachteile dadurch, dass der Trägerrahmen und der Gehäusedeckel in das Spritzgießwerkzeug eingelegt werden und dass anschließend der elastomere Werkstoff in das Werkzeug eingespritzt wird und dass danach, mittels Vulkanisierens, eine unlösbare Verbindung zwischen dem Trägerelement und dem Gehäusedeckel erzeugt wird.

Durch das erfindungsgemäße Verfahren zur Herstellung des Gehäusedeckels ist es nun möglich, mit einem minimalen Fertigungsaufwand einen Gehäusedeckel zu produzieren, der eine optimale Anbindung zwischen der elastomeren Dichtung und dem Gehäusedeckel besitzt. Dabei werden der Gehäusedeckel, der aus Kunststoff oder Metall gefertigt sein kann, und das Trägerblech in ein gemeinsames Spritzwerkzeug eingelegt und anschließend mit einem Elastomer umspritzt. Da das Elastomer während des Einspritzens in das Werkzeug gleichzeitig den Trägerrahmen und den Gehäusedeckel benetzt, kann im Gegensatz zum Stand der Technik mindestens ein Fertigungsschritt entfallen.

Im Werkzeug findet nun unmittelbar der erste Teil der Vulkanisation statt. Dabei verbleibt der Gehäusedeckel so lange im Spritzgießwerkzeug, bis der Zustand der Vernetzung so weit fortgeschritten ist, dass die Form der Dichtung erhalten bleibt, aber auch nur so kurz, dass wirtschaftliche Zykluszeiten erreicht werden. Der Vulkanisationsprozess endet mit einem Tempern des Gehäusedeckels. So wird beispielsweise ein Polyacrylat-Kautschuk (ACM) bei ca. 180°C, ca. 5 Stunden getempert.

Vor dem Einspritzen wird auf das Gehäuse und den Trägerrahmen ein Bindemittel aufgetragen wird. Als Bindemittel kommen dabei Silane, Phenolharz- oder Epoxidharzsysteme, gelöste Elastomere oder Hilfsmittel, wie beispielsweise Pigmente, Füllstoffe, etc., zum Einsatz. Der Einsatz von Bindemitteln ist aber nicht zwingend erforderlich, so ist es zum Beispiel möglich, die Elastomere AEM, FPM und MVQ auch ohne den Einsatz von Bindemitteln zu verspritzen.

Als Elastomere für die Dichtung werden bevorzugt Ethylen-Vinylacrylat (AEM), Ethylen-Vinylacetat (EAM), Polyacrylat-Kautschuk (ACM), Fluor-Kautschuk (FPM), Acrylnitril-Butadien-Kautschuk (NBR, XNBR), Hydrierter-Acrylnitril-Butadien-Kautschuk (HNBR), Epichlorhydrin-Copolymer-Kautschuk (ECO), Methyl-Vinyl-Silikon-Kautschuk (MVQ) oder Fluor-Silikon-Kautschuk (FVMQ) verwendet.

Das Elastomer hat die Aufgabe den Gehäusedeckel zu entkoppeln. In einer weiteren Ausgestaltung der Erfindung ist es auch möglich den Gehäusedeckel formschlüssig zu umspritzen, so dass die Dichtung eine zusätzliche Stützfunktion erhält. Weiterhin ist es möglich, an die Dichtung Dichtlippen anzuformen. Es ist auch denkbar, die Dichtung in der Weise auszubilden, dass sie als Montagehilfe dient.

Es ist aber auch möglich den Trägerrahmen so auszubilden, dass er bei der Montage als Einführhilfe dient. Eine weitere vorteilhafte Ausgestaltung des erfindungsgemäßen Gedankens ist, dem Trägerrahmen eine Haltefunktion für Anbauteile zu übertragen. Der Trägerrahmen wird dabei vorteilhaft aus einem metallischen Werkstoff, wie Stahl oder Aluminium, oder aus einem Kunststoff gefertigt.

Im Bereich zwischen den Schrauben dient der Trägerrahmen als Stütze für den elastomeren Werkstoff. Im Bereich der Schrauben übernimmt er die Funktion der Positionierung der Schrauben und kann gleichzeitig als Unterlegscheibe fungieren.

Erfindungsgemäße Gestaltungsbeispiele von Gehäusedeckeln werden nachstehend anhand von Zeichnungen und im weiteren in der Beschreibung näher erläutert. Es zeigen:
- Figur 1: ein erfindungsgemäßes Ausführungsbeispiel eines Gehäusedeckels im Schnitt und im Bereich der Befestigungsschraube.
- Figur 2: ein erfindungsgemäßes Ausführungsbeispiel eines Gehäusedeckels im Schnitt und im Bereich der Befestigungsschraube, mit einer formschlüssigen Dichtung.

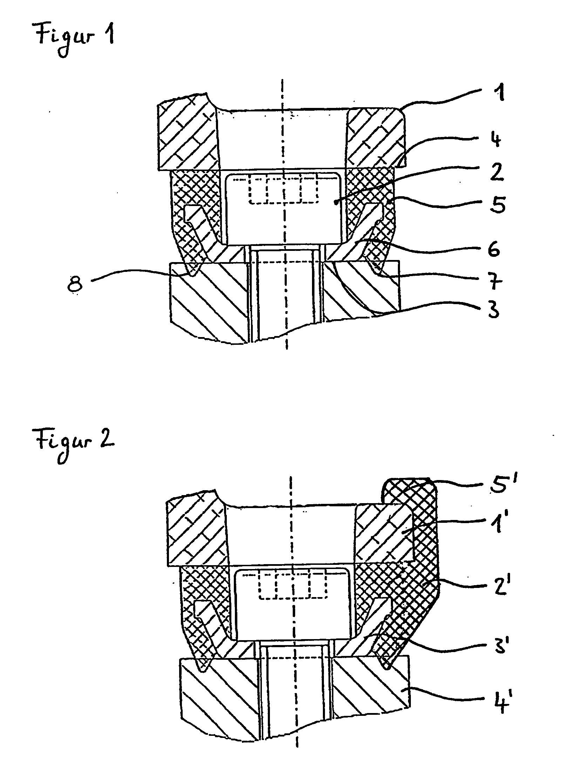

In Figur 1 ist der Schnitt durch einen erfindungsgemäßen Gehäusedeckel 1, im Bereich der Befestigungsschraube 2, dargestellt. An der der Zylinderkopfoberfläche 3 zugewandten Seite 4 ist die elastomere Dichtung 5 mittels Vulkanisierens mit dem Gehäusedeckel verbunden. Die elastomere Dichtung 5 verbindet dabei den Trägerrahmen 6 mit dem Gehäusedeckel 1 und besitzt in diesem Ausführungsbeispiel zwei Dichtlippen 7, 8. Die Dichtlippen 7, 8 sind dabei zur Verdeutlichung im unverbauten Zustand dargestellt.

Figur 2 stellt den Schnitt durch einen erfindungsgemäßen Gehäusedeckel 1', die elastomere Dichtung 2', den Trägerrahmen 3' und den Zylinderkopf 4' dar. Als zusätzliche Sicherung ist der Gehäusedeckel 1' dabei von der elastomeren Dichtung 2' formschlüssig 5' umspritzt ausgeführt.

## Patentansprüche

1. Verfahren zur Herstellung eines Gehäusedeckels (1, 1') für eine Verbrennungskraftmaschine, insbesondere Zylinderkopfhauben oder Ölwannen, zum lösbaren Befestigen am Motorblock (4'), insbesondere mittels Schrauben (2), mit einer elastomeren Dichtung (5, 2'), die einen Trägerrahmen (6, 3') enthält und die zum flüssigkeitsdichten Verschließen gegenüber einer Zylinderkopfoberfläche (3) dient, wobei die Dichtung (5, 2') mit dem Gehäusedeckel (1, 1') unlösbar verbunden ist, **dadurch gekennzeichnet, dass** der Trägerrahmen (6, 3') und der Gehäusedeckel (1, 1') in das Spritzgießwerkzeug eingelegt werden und dass anschließend der elastomere Werkstoff (5, 2') in das Werkzeug eingespritzt wird und dass danach, mittels Vulkanisierens, eine unlösbare Verbindung (4) zwischen dem Trägerelement (6, 3') und dem Gehäusedeckel (1, 1') erzeugt wird, wobei vor dem Einspritzen des elastomeren Werkstoffes (5, 2') in das Spritzwerkzeug ein Bindemittel auf den Trägerrahmen (6, 3') und den Gehäusedeckel (1, 1') aufgetragen wird, wobei vorzugsweise Silane, Phenolharz- oder Epoxidharzsysteme, gelöste Elastomere oder Hilfsmittel als Bindemittel verwendet werden.

2. Verfahren zur Herstellung eines Gehäusedeckels nach Anspruch 1 **dadurch gekennzeichnet, dass** der in das Werkzeug eingespritzte Werkstoff als Elastomer (5, 2') der Form AEM, ACM, FPM, XNBR, NBR, ECO, MVQ oder FMVQ vorliegt.

3. Verfahren zur Herstellung eines Gehäusedeckels nach einem der Ansprüche 1 bis 2, **dadurch gekennzeichnet, dass** der Gehäusedeckel von dem elastomeren Werkstoff (5, 2') formschlüssig (5') umspritzt wird.

4. Verfahren zur Herstellung eines Gehäusedeckels nach einem der Ansprüche 1 bis 3, **dadurch gekennzeichnet, dass** als Trägerrahmen (6, 3') ein metallischer Werkstoff oder ein Kunststoff verwendet wird.

5. Gehäusedeckel hergestellt nach einem der Ansprüche 1 bis 4, **dadurch gekennzeichnet, dass** zwischen dem Trägerelement (6, 3') und dem Gehäusedeckel (1,1') eine unlösbare Verbindung (4) besteht, die mittels Vulkanisierens erzeugt ist.

## Claims

1. Method for producing a housing cover (1, 1') for an internal combustion engine, in particular a cylinder head cover or oil sump, for removable attachment to the engine block (4'), in particular by means of screws (2), having an elastomer gasket (5, 2') which comprises a support frame (6, 3') and serves to seal in fluid-tight manner relative to a cylinder head surface (3), wherein the gasket (5, 2') is non-removably attached to the housing cover (1, 1'), **characterised in that** the support frame (6, 3') and the housing cover (1, 1') are inserted into the injection moulding tool and that subsequently, the elastomer material (5, 2') is injected moulded into the tool and that thereafter, a non-detachable connection (4) is created between the support element (6, 3') and the housing cover (1, 1') by means of vulcanising, wherein before injection of the elastomer material (5, 2') into the injection moulding tool, a binding agent is applied to the support frame (6, 3') and the housing cover (1, 1'), wherein preferably silanes, phenolic resin or epoxy resin systems, dissolved elastomers or auxiliary agents are used as binding agents.

2. Method for producing a housing cover according to claim 1, **characterised in that** the material injected into the tool is present in the form of an elastomer (5, 2') of the type AEM, ACM, FPM, XNBR, NBR, ECO, MVQ or FMVQ.

3. Method for producing a housing cover according to one of the claims 1 to 2, **characterised in that** the elastomer material (5, 2') is injection moulded round the housing cover in form-fitting manner (5').

4. Method for producing a housing cover according to one of the claims 1 to 3, **characterised in that** a metallic material or a plastics material is used as the support frame (6, 3').

5. Housing cover produced according to one of the claims 1 to 4, **characterised in that** between the support element (6, 3') and the housing cover (1, 1'), a non-detachable connection which is made by vulcanising exists.

## Revendications

1. Procédé de fabrication d'un couvercle de carter (1, 1') pour un moteur à combustion interne, notamment des couvercles de culasse ou des cuvettes à huile, pour la fixation détachable sur le bloc moteur (4'), notamment au moyen de vis (2), avec une garniture (5, 2') élastomère qui contient un cadre porteur (6, 3') et qui sert à la fermeture étanche aux liquides par rapport à une surface de culasse (3), la garniture (5, 2') étant reliée de manière indétachable au couvercle de carter (1, 1'), **caractérisé en ce que** le cadre porteur (6, 3') et le couvercle de carter (1, 1') sont placés dans le moule pour injection et **en ce que** le matériau élastomère (5, 2') est ensuite moulé par injection dans le moule et **en ce qu'**après, une liaison indétachable (4) entre l'élément porteur (6, 3') et le couvercle de carter (1, 1') est générée au moyen de la vulcanisation, un liant étant appliqué sur le cadre porteur (6, 3') et le couvercle de carter (1, 1') avant le moulage par injection du matériau élastomère (5, 2') dans le moule pour injection, des silanes, des systèmes de résine phénolique ou époxy, des élastomères ou des adjuvants dissous étant de préférence utilisés comme liant.

2. Procédé de fabrication d'un couvercle de carter selon la revendication 1, **caractérisé en ce que** le matériau moulé par injection dans le moule se présente sous la forme d'un élastomère (5, 2') de type AEM, ACM, FPM, XNBR, NBR, ECO, MVQ ou FMVQ.

3. Procédé de fabrication d'un couvercle de carter selon l'une quelconque des revendications 1 à 2, **caractérisé en ce que** le couvercle de carter est moulé par injection en matériau élastomère (5, 2') par correspondance de formes (5').

4. Procédé de fabrication d'un couvercle de carter selon l'une quelconque des revendications 1 à 3, **caractérisé en ce qu'**un matériau métallique ou une matière plastique est utilisée comme cadre porteur (6, 3').

5. Couvercle de carter fabriqué selon l'une quelconque des revendications 1 à 4, **caractérisé en ce qu'**une liaison indétachable (4) existe entre l'élément porteur (6, 3') et le couvercle de carter (1, 1'), laquelle est générée au moyen de la vulcanisation.
